# EUROPEAN PATENT SPECIFICATION

(11) **EP 3 032 625 B1**
(45) Date of publication and mention of the grant of the patent: **08.01.2020**
(21) Application number: 14834165.4
(22) Date of filing: 07.08.2014
(51) Int. Cl.: H01M 8/0221, H01M 8/0213, H01M 8/0226, H01M 8/1018

(54) **FUEL CELL SEPARATOR**
BRENNSTOFFZELLENSEPARATOR
SÉPARATEUR POUR PILE À COMBUSTIBLE

(30) Priority: 08.08.2013 JP 2013165183
(43) Date of publication of application: 15.06.2016
(60) Divisional application: 17181940.2
(73) Proprietor: Nisshinbo Chemical Inc., Chuo-ku Tokyo 103-8650 (JP)
(72) Inventor: MATSUMOTO Nobuyuki, Chiba-shi Chiba 267-0056 (JP)
(74) Representative: Mewburn Ellis LLP
(86) International application number: PCT/JP2014/070858
(87) International publication number: WO 2015/020146

(56) References cited:
- JP-A- 2002 164 063
- JP-A- 2002 184 420
- JP-A- 2002 331 806
- JP-A- 2003 176 327
- JP-A- 2005 116 282
- JP-A- 2005 209 641
- JP-A- 2007 035 615
- JP-A- 2009 123 491
- US-A1- 2002 055 030
- US-A1- 2003 148 164
- US-A1- 2006 060 824
- US-A1- 2007 154 771
- US-A1- 2009 011 318
- DATTA/D J LOHSE S ED - SUDHIN DATTA ET AL: "Polymeric Compatibilizers, Uses and Benefits in Polymer Blends", 1 January 1996 (1996-01-01), POLYMERIC COMPATIBILIZERS. USES AND BENEFITS IN POLYMER BLENDS, MUNICH, HANSER, DE, PAGE(S) 1,03 - 05, XP002081896, ISBN: 978-3-446-17411-5

## Description

### TECHNICAL FIELD

This invention relates to a fuel cell separator.

### BACKGROUND ART

Fuel cell separators, along with imparting electrical conductivity to each unit cell and providing flow channels for the fuel and air (oxygen) supplied to the unit cells, also serve as boundary walls separating the unit cells.

Characteristics required of a separator thus include high electrical conductivity, gas barrier properties, chemical stability, heat resistance and hot water resistance.

Fuel cell separator materials that have been used to date include glassy carbon, materials obtained by blending graphite with a thermoset resin, and metals. Such materials have a low elasticity and, with the slightest thickness variation or dimensional change, are unable to achieve sufficient sealability. As a result, not only are they required to have a high dimensional precision, adhesion of the contacting surfaces between stacked separators is poor, sometimes worsening the contact resistance.

In carbon separators, another problem is that cracks tend to develop from clamping with bolts and nuts during fuel cell assembly, and gas leaks end up arising from the cracks. In automotive applications, in particular, where separators of reduced thinness are desired, the separators have a poor handleability during thin-wall molding and are prone to cracking.

Separators that address such problems by using a conductive material and a thermoplastic elastomer to impart flexibility to the separator have been disclosed (see Patent Documents 1 to 3). However, thermoplastic elastomers inherently have a low density, and so drawbacks of separators fabricated using a thermoplastic elastomer as the binder include inadequate fuel gas barrier properties and, because such elastomers are thermoplastic resins, inferior compression creep properties in fuel cells that operate under a fixed pressure. In addition, durability is also a problem.

To improve the properties diminished by the use of a thermoplastic elastomer, some proposed solutions call for compounding or modifying a conductive filler, but a direct solution relating to the gas barrier properties has not been found.

Hence, the fact of the matter is that there do not exist any fuel cell separators which are satisfactory in terms of flexibility, gas barrier properties, durability, electrical conductivity and the like.

US 2002/0055030 A1 discloses a separator for a fuel cell made by molding a resin composition comprising an electroconductive agent, which comprises a carbon powder, and a radical-polymerizable thermosetting resin system by a resin molding method.

US 2009/0011318 A1 discloses a curable composition for a fuel cell separator. The composition comprises (A) a hydrocarbon compound having a plurality of carbon-carbon double bonds, (B) an elastomer excluding (A), and (C) a carbonaceous material.

US 2003/0148164 A1 discloses a fuel cell separator or water transport plate formed of graphite, carbon fibers and an inert thermosetting hydrophilic binder.

US 2007/0154771 A1 discloses a fuel cell flow field plate or bipolar plate having flow channels on faces of the plate and a particular bulk electrical conductivity. The fuel cell flow field plate or bipolar plate comprises an electrically conductive polymer composite composed of (A) at least 50% by weight of a particular conductive filler; (B) 1 to 49.9% by weight of polymer matrix material and (C) 0.1 to 10% by weight of polymer binder, wherein the sum of the weight percents of (A) to (C) is 100%.

JP 2005 116282 discloses a moldable conductive composition comprising conductive component - containing granulated graphite particles and conductive particles - and resin in a particular weight ratio. The granulated graphite particles have particular bulk and tap densities and angle of repose. The conductive particles have particular average particle diameter, absorbed oil amount, powder resistance and specific surface area.

### PRIOR ART DOCUMENTS

### PATENT DOCUMENTS

Patent Document 1: JP-A 2001-313045
Patent Document 2: JP-A 2005-18994
Patent Document 3: JP-A 2012-15118

### SUMMARY OF THE INVENTION

### PROBLEMS TO BE SOLVED BY THE INVENTION

This invention was arrived at in view of the above circumstances. The object of the invention is to provide a fuel cell separator which is flexible (not prone to cracking) and also has excellent gas barrier properties and durability.

### MEANS FOR SOLVING THE PROBLEMS

The inventor has conducted extensive investigations in order to attain the above object, discovering as a result that, by using a thermoset resin and a thermoplastic elastomer together as the binder resin for a carbonaceous material, there can be obtained a fuel cell separator which, along with having both flexibility and gas barrier properties, also has an excellent durability and can be efficiently produced.

Accordingly, the invention provides:
1. A fuel cell separator obtained by molding a composition which contains a carbonaceous material and a resin binder, the fuel cell separator being characterized in that the resin binder includes a thermoset resin, a thermoplastic elastomer, and a compatibilizer which renders the thermoset resin and thermoplastic elastomer compatible during mixing and molding, wherein the thermoset resin includes at least one selected from the group consisting of phenolic resins, epoxy resins, furan resins, urea resins, melamine resins, polycarbodiimide resins, silicone resins and benzoxazine resins;
   wherein the binder contains thermoset resin in an amount from 1 to 100 parts by weight per 100 parts by weight of the combined amount of the thermoplastic elastomer and the compatibilizer,
   and the weight ratio of thermoplastic elastomer to compatibilizer is from 4:6 to 9:1.
2. The fuel cell separator of 1 above, wherein the thermoplastic elastomer includes a styrene thermoplastic elastomer;
3. The fuel cell separator of 2 above, wherein the styrene thermoplastic elastomer is a hydrogenated styrene thermoplastic elastomer;
4. The fuel cell separator of 3 above, wherein the hydrogenated styrene thermoplastic elastomer is a side chain-bearing hydrogenated styrene thermoplastic elastomer;
5. The fuel cell separator of 4 above, wherein the side chain-bearing hydrogenated styrene thermoplastic elastomer is a block copolymer containing a side-chain-bearing polyolefin polymer block and a styrene polymer block;
6. The fuel cell separator of any one of 1 to 5 above, wherein the compatibilizer is a thermoplastic elastomer;
7. The fuel cell separator of any one of 1 to 6 above, wherein the compatibilizer is an acid-modified thermoplastic elastomer;
8. The fuel cell separator of 7 above, wherein the acid-modified thermoplastic elastomer is a maleic anhydride-modified hydrogenated styrene-ethylene-butylene-styrene block copolymer. Claims 9 to 11 define further preferred features. Also disclosed is a method for producing a fuel cell separator, the method being characterized by including the steps of preparing a slurry by mixing together a carbonaceous material, a thermoset resin, a thermoplastic elastomer and a solvent; coating the slurry onto a surface; removing the solvent to form a sheet-like separator precursor; and molding the separator precursor.

### ADVANTAGEOUS EFFECTS OF THE INVENTION

The fuel cell separator of the invention, because it possesses a suitable flexibility, is not prone to cracking and also has other good performance attributes, such as decreased contact resistance. In addition, the gas barrier properties and durability are also excellent.

The fuel cell separator of the invention is thus an outstanding product which retains the flexibility of an elastomer, yet possesses gas barrier properties, heat resistance and electrical characteristics comparable to those of conventional fuel cell separators made primarily of a thermoset resin.

Moreover, a separator can be obtained by, for example, rendering a composition containing a carbonaceous material, a thermoset resin and a thermoplastic elastomer into a sheet-like precursor, then compression-molding the precursor. As a result, improved separator productivity by sheet feeding can also be expected.

### BRIEF DESCRIPTION OF THE DIAGRAMS

[Fig. 1] FIG. 1 shows, in a folded state, the fuel cell separator produced in Example 1.
[Fig. 2] FIG. 2 shows, in a folded state, the fuel cell separator produced in Example 3.
[Fig. 3] FIG. 3 shows, in a folded state, the fuel cell separator produced in Example 4.
[Fig. 4] FIG. 4 shows, in a folded state, the fuel cell separator produced in Comparative Example 1.

### EMBODIMENT FOR CARRYING OUT THE INVENTION

The invention is described more fully below.

The fuel cell separator of the invention (sometimes referred to below simply as the "separator") is obtainable by molding a composition containing a carbonaceous material and a resin binder, and is characterized in that the resin binder contains a thermoset resin, a thermoplastic elastomer and, a compatibilizer as defined in claim 1.

The thermoset resin may be suitably selected from among those including phenolic resins, epoxy resins, furan resins, urea resins, melamine resins, polycarbodiimide resins, silicone resins, and benzoxazine resins. These may be used singly, or two or more may be used in combination. Of these, because of their excellent heat resistance and mechanical strength, preferred use can be made of epoxy resins.

The epoxy resin is not particularly limited, provided it has epoxy groups. Illustrative examples include o-cresol novolak-type epoxy resins, phenol novolak-type epoxy resins, bisphenol A-type epoxy resins, hydrogenated bisphenol A-type epoxy resins, bisphenol F-type epoxy resins, hydrogenated bisphenol F-type epoxy resins, biphenyl-type epoxy resins and brominated epoxy resins. These may be used singly, or two or more may be used in combination. Of these, o-cresol novolac-type epoxy resins are preferred.

Exemplary curing agents for when epoxy resins are used include phenolic resins and amine compounds, acid anhydrides, polyaminoamide compounds, dicyandiamide, imidazole compounds, polymercaptan compounds and isocyanate compounds. Of these, from the standpoint of raising the glass transition point so as to improve heat resistance, and enhancing the mechanical strength properties when hot, the use of a phenolic resin is preferred.

Examples of phenolic resins include novolak-type phenolic resins, cresol novolak-type phenolic resins, resole-type phenolic resins and aralkyl-modified phenolic resins. These may be used singly or two or more may be used in combination.

A curing accelerator for the thermoset resin may be included in the invention. Illustrative examples of the curing accelerator include phosphine compounds such as triphenylphosphine (TPP) and tetraphenylphosphine; amine compounds such as diazabicycloundecene (DBU) and dimethylbenzylamine (BDMA); and imidazole compounds such as 2-methylimidazole, 2-methyl-4-imidazole, 2-undecylimidazole, 2-heptadecylimidazole, 2-phenylimidazole, 2-phenyl-4-methylimidazole, 1-(2-chlorophenyl)imidazole, 1-(3-chlorophenyl)imidazole, 1-(4-chlorophenyl)imidazole, 1-(3-fluorophenyl)imidazole, 1-(4-fluorophenyl)imidazole, 1-(4-methoxyphenyl)imidazole, 1-o-tolylimidazole, 1-m-tolylimidazole, 1-(3,5-dimethylphenyl)imidazole, 2-(4-chlorophenyl)imidazole, 2-(4-fluorophenyl)imidazole, 5-phenylimidazole, 5-(2-chlorophenyl)imidazole, 5-(3-chlorophenyl)imidazole, 5-(4-chlorophenyl)imidazole, 5-(2-fluorophenyl)imidazole, 5-(3-fluorophenyl)imidazole, 5-(4-fluorophenyl)imidazole, 5-(2-methoxyphenyl)imidazole, 5-(3-methoxyphenyl)imidazole, 5-(4-methoxyphenyl)imidazole, 5-o-tolylimidazole, 5-m-tolylimidazole, 5-p-tolylimidazole and 1-benzyl-2-methylimidazole. These may be used singly, or two or more may be used in combination.

Of the foregoing compounds, to increase the thermal stability of the resin binder, to prevent the curing reaction from proceeding abruptly within the mold during molding of the separator, causing the melt viscosity and molding pressure to rise, and to provide a suitable activity as a curing accelerator, the use of an imidazole compound is preferred.

In order to have the curing reaction proceed efficiently and mildly, the amount of curing accelerator included is preferably from 0.65 to 2.0 parts by weight per 100 parts by weight of the resin binder.

The thermoplastic elastomer is exemplified by, but not particularly limited to, styrene thermoplastic elastomers, olefin thermoplastic elastomers, urethane thermoplastic elastomers, polyester thermoplastic elastomers, polyamide thermoplastic elastomers, 1,2-polybutadiene thermoplastic elastomers and fluorinated thermoplastic elastomers. These may be used singly or in combinations of two or more. Of these, to obtain heat resistance and a good flexibility, the thermoplastic elastomer used in the invention preferably includes a styrene thermoplastic elastomer. From the standpoint of further increasing the heat resistance properties, it is more preferable to include a hydrogenated styrene thermoplastic elastomer.

In order to retain the gas barrier properties of the resulting separator, the thermoplastic elastomer component used in the invention more preferably includes a side chain-bearing hydrogenated styrene thermoplastic elastomer, and even more preferably includes a block copolymer containing a side chain-bearing polyolefin polymer block and a styrene polymer block.

Illustrative examples of styrene thermoplastic elastomers include styrene-butadiene-styrene block copolymers (SBS), hydrogenated styrene-ethylene-butylene-styrene block copolymers (SEBS), styrene-isoprene-styrene block copolymers (SIS), styrene-ethylene-propylene-styrene block copolymers (SEPS), styrene-isobutylene-styrene block copolymers (SIBS) and styrene-ethylene-butylene-olefin crystalline block copolymers (SEBC). However, taking into account the various characteristics of the resulting above-described separator, of these, styrene-isobutylene-styrene block copolymers (SIBS) are most preferred.

A thermoset resin and a thermoplastic elastomer, which are differing types of materials, are both included in the composition used in this invention. These differing types of materials, in terms of their affinity and thermal properties, are not inherently compatible. To obtain a separator having a better performance, it is desirable for both ingredients to be miscible within the composition.

From this standpoint, included in the composition used in this invention, as one ingredient of the resin binder, is a compatibilizer which renders these differing materials compatible during mixing and molding.

Regarding the properties of the compatibilizer, a "phase-separated system" is preferred in which polymers of differing natures are present as discrete phases and the compatibilizer stabilizes the dispersed polymers by being present at the interfaces.

By using this phase-separated system compatibilizer, there forms within the composition a structure having numerous island phases dispersed within a disperse phase, which enables the properties of both the thermoset resin and the thermoplastic elastomer to be better manifested.

Compatibilizers are classified as nonreactive compatibilizers which have no reactive groups within the molecular structure, and reactive compatibilizers which have reactive groups. Either of these may be used.

Exemplary nonreactive compatibilizers include those having a structure in which the differing types of polymer are chemically bonded (block, random, and graft polymers). Illustrative examples include thermoplastic elastomers such as styrene-butadiene-styrene block copolymers (SBS), hydrogenated styrene-ethylene-butylene-styrene block copolymers (SEBS) and styrene-ethylene-propylene-styrene block copolymers (SEPS); and polypropylene-styrene graft copolymers.

Exemplary reactive compatibilizers include modified thermoplastic elastomers obtained by introducing polar functional groups such as carboxyl groups, epoxy groups or hydroxyl groups into the above thermoplastic elastomer. Illustrative examples include acid-modified thermoplastic elastomers such as maleic anhydride-modified hydrogenated styrene-ethylene-butylene-styrene block copolymers (acid-modified SEBS), and epoxy-modified thermoplastic elastomers such as epoxidized styrene-butadiene-styrene block copolymers (epoxidized SBS).

Other exemplary reactive compatibilizers are homopolymers (thermoplastic resins) having the above polar functional groups introduced thereon, illustrative examples of which include maleic anhydride-modified polyolefins such as maleic anhydride-modified polypropylene.

Copolymeric (thermoplastic resin) compounds of a polar functional group-containing monomer such as an epoxy group-containing (meth)acrylate compound or maleic anhydride with another polymerizable double bond-containing monomer can also be used as a reactive compatibilizer. Illustrative examples include ethylene-glycidyl methacrylate copolymers (EGMA) and styrene-maleic anhydride copolymers (SMA).

Of these, the use in this invention of a reactive compatibilizer is preferred because advantageous effects can readily be obtained on thermoset resins. Because a thermoplastic elastomer is used as the resin binder, the use of a thermoplastic elastomer-type compatibilizer is more preferred. An acid-modified thermoplastic elastomer having an excellent compatibilizing performance is still more preferred, with a maleic anhydride-modified hydrogenated styrene-ethylene-butylene-styrene block copolymer being most preferred.

The amount of compatibilizer used is not particularly limited, although the weight ratio of thermoplastic elastomer to compatibilizer is from 4:6 to 9:1 in claim 1.

The thermoplastic elastomers used in the invention (including thermoplastic elastomers used as compatibilizers) may be commercial products, illustrative examples of which include the styrene-isobutylene-styrene block copolymers SIBSTAR® 072T, 073T, 102T and 103T (available from Kaneka Corporation), the hydrogenated styrene-ethylene-butylene-styrene block copolymers Tuftec® H1041, H1043, H1051, H1052, H1053, H1062, H1221 and H1517 (available from Asahi Kasei Chemicals Corporation) and DYNARON® 8600P, 8601P, 8903P and 9901P (available from JSR Corporation), the maleic anhydride-modified hydrogenated styrene-ethylene-butylene-styrene block copolymers Tuftec® M1911, M1913 and M1943 (available from Asahi Kasei Chemicals Corporation), and the polar functional group-modified elastomers f-DYNARON® 4630P and 8630P (available from JSR Corporation).

The relative proportions in which the thermoset resin, the thermoplastic elastomer and the compatibilizer are included in the resin binder are suitably set while taking into account, for example, the flexibility and gas barrier properties of the separator to be obtained, The amount of thermoset resin in claim 1 is from about 1 to about 100 parts by weight per 100 parts by weight of the combined amount of the thermoplastic elastomer and the compatibilizer. However, particularly from the standpoint of imparting flexibility while ensuring gas barrier properties, the amount of thermoset resin used per 100 parts by weight of the combined amount of the thermoset elastomer and the compatibilizer is preferably from 30 to 100 parts by weight, and more preferably from 50 to 100 parts by weight.

Illustrative examples of carbonaceous materials that may be used in this invention include natural graphites such as earthy graphite, vein graphite and flake graphite, synthetic graphite, expanded graphite, kish graphite, amorphous graphite, carbon black, acetylene black and ketjen black. These may be used singly, or two or more may be used in combination. In this invention, the use of a carbonaceous material containing at least a graphite material such as natural graphite, synthetic graphite, expanded graphite or kish graphite is preferred. To increase the gas barrier properties of the resulting separator, the use of a carbonaceous material containing flake graphite is preferred.

To increase the electrical conductivity of the resulting separator, the use of a material having excellent electric conductivity, such as carbon black, acetylene black or ketjen black (referred to below as a "highly conductive material"), together with a graphite material is more preferred, with a carbonaceous material containing flake graphite and carbon black being most preferred.

The relative proportions in which the graphite material and the highly conductive material are used is not particularly limited, although the amount of the highly conductive material is preferably from 1 to 50 parts by weight, more preferably from 5 to 20 parts by weight, and even more preferably from 8 to 15 parts by weight, per 100 parts by weight of the graphite material.

In this invention, the graphite material has an average particle size (d = 50) which, although not particularly limited, is preferably from 10 to 80 µm, more preferably from 20 to 60 µm, and even more preferably from 30 to 50 µm.

The average particle size (d = 50) is a value measured with a particle size analyzer (available from Nikkiso Co., Ltd.).

With regard to the amounts of carbonaceous material and resin binder used in this invention, the amount of carbonaceous material used per 100 parts by weight of the resin binder may be set to from about 30 to about 5,000 parts by weight. However, taking into account the gas barrier properties, electrical conductivity, flexibility and other characteristics of the separator to be obtained, the amount of carbonaceous material per 100 parts by weight of resin binder is preferably from 100 to 1,000 parts by weight, more preferably from 200 to 700 parts by weight, and even more preferably from 400 to 600 parts by weight.

In the composition used in the invention, an internal mold release agent may be included for the purpose of enhancing mold releasability. Illustrative examples of internal mold release agents include stearic acid wax, amide wax, montanic acid wax, carnauba wax and polyethylene wax. These may be used singly or two or more may be used in combination.

The content of internal mold release agent in the composition, although not particularly limited, is typically from 0.1 to 1.5 parts by weight, and preferably from 0.3 to 1.0 part by weight, per 100 parts by weight of the carbonaceous material.

The separator of the invention is obtained by molding the composition into a desired separator shape. The method of preparing the composition and the method of molding the separator are not particularly limited. Use may be made of various hitherto known methods.

Preparation of the composition may be carried out by, for example, mixing each of the resins used in the resin binder and the carbonaceous powder in any order and in given proportions. Examples of mixers that may be used for such mixing include planetary mixers, ribbon blenders, Loedige mixers, Henschel mixers, rocking mixers and Nauta mixers.

The method of molding the separator also is not particularly limited. For example, use can be made of an injection molding, transfer molding, compression molding or extrusion process. Of these, to obtain a separator of excellent precision and mechanical strength, the use of compression molding is preferred.

The compression molding conditions are a mold temperature of 80 to 200°C, a molding pressure of 1.0 MPa or more but less than 20 MPa, preferably from 2.0 to 10 MPa, and a molding time of from 20 seconds to 1 hour.

After compression molding, to promote thermosetting, 1 to 60 minutes of additional heating at 150 to 200°C may be carried out.

In cases where the composition used in the invention is a solvent-containing slurry, a separator of the desired shape may be obtained by coating the slurry onto, for example, a release film, removing the solvent to form a sheet-like precursor, and then compression molding the precursor. In this technique, because the precursor fabricated from the inventive composition has a high flexibility that allows it to be rolled, continuous feeding of the sheet is possible, leading to improved separator productivity.

The solvent here is not particularly limited, provided it is capable of preparing a coatable slurry. Illustrative examples include aliphatic hydrocarbon solvents such as pentane, hexane and heptane; aromatic hydrocarbon solvents such as toluene, p-xylene, o-xylene, m-xylene and ethylbenzene; ketone solvents such as acetone, methyl ethyl ketone, methyl isopropyl ketone, diethyl ketone, methyl isobutyl ketone, methyl n-butyl ketone, cyclopentanone and cyclohexanone; ester solvents such as ethyl acetate, isopropyl acetate, n-propyl acetate, isobutyl acetate and n-butyl acetate; aliphatic alcohols such as methanol, ethanol, n-propanol, isopropanol, n-butanol, isobutanol, t-butanol, 1-pentanol, 1-hexanol and cyclohexanol; ether solvents such as diethyl ether, tetrahydrofuran and 1,4-dioxane; amide solvents such as N,N-dimethylformamide, N,N-dimethylacetamide (DMAc) and N-methylpyrrolidone; cyclic urea solvents such as 1,3-dimethyl-2-imidazolidinone and 1,3-dimethyl-3,4,5,6-tetrahydro-2(1H)-pyrimidinone; and dimethylsulfoxide. These may be used singly or two or more may be used in admixture. The use of a mixed solvent of a ketone solvent and an aromatic hydrocarbon solvent is preferred, with the use of a mixed solvent of methyl ethyl ketone and toluene being especially preferred. The mixing ratio of the ketone solvent and the aromatic hydrocarbon solvent is discretionary, and may be set to a weight ratio of from 1:9 to 9:1, preferably from 6:4 to 9:1, and more preferably from 7:3 to 8:2.

The solids concentration of the slurry, although not particularly limited, is preferably from about 1 to about 50 wt %, and more preferably from about 30 to about 50 wt %.

The slurry preparation method may be any wherein the carbonaceous material, each of the resins making up the resin binder, the curing accelerator that is optionally used, and the solvent are mixed together in any order. However, the method employed is preferably one in which the carbonaceous material is added and mixed into a mixture of each of the resins making up the resin binder, the curing accelerator that is optionally used and the solvent. Mixture may be carried out using the known mixers mentioned above.

The slurry coating method is not particularly limited and may be suitably selected from among known methods, such as spin coating, dipping, flow coating, inkjet printing, jet dispensing, spraying, bar coating, gravure coating, roll coating, transfer printing, brush coating, blade coating and air knife coating.

The solvent removal temperature varies depending on the solvent used and thus cannot be strictly specified. Also, this must be a lower temperature than the temperature at which the thermoset resin begins to cure, and can generally be set to from room temperature to about 150°C, and more preferably from about 50°C to about 130°C.

Prior to heating for solvent removal, the slurry may be pre-dried at from room temperature to about 80°C.

The surface of the separator thus obtained may be subjected to an existing hydrophilizing treatment such as blasting, plasma treatment, corona discharge treatment, flame treatment or UV treatment.

In addition, it is possible to lower the surface resistance of the separator by carrying out surface treatment in which the separator is irradiated with a laser to remove the resin components from the surface layer of the separator.

The separator of the invention generally has a suitable flexibility characterized by a flexural strain of about 0.65 to 1.5% and a flexural stress of about of 25 to 50 MPa, and has gas barrier properties characterized by a gas permeability coefficient of not more than about 9.0×10⁻¹⁰ mol·m/m²·sec·MPa. Depending on the composition, the separator may be one having a good gas permeability coefficient of not more than 3.0×10⁻¹⁰ mol · m/m² · sec · MPa.

With regard to other separator characteristics, the inventive separator has an electrical conductivity such that the volume resistivity is not more than about 40 mΩ·cm, a heat resistance such that the glass transition temperature is at least about 120°C, and a durability such that the weight change in a hot-water immersion test is not more than about 2.0 wt %. Depending on the composition, the separator may be one having a good electrical conductivity such that the volume resistivity is not more than 25 mΩ·cm, and a good heat resistance and durability such that the glass transition temperature is at least 140°C and the weight change in a hot-water immersion test is not more than about 1.4 wt %.

### EXAMPLES

The invention is illustrated more concretely below by way of Examples and Comparative Examples, although these Examples are not intended to limit the invention.

Evaluations of various properties in the following Examples were carried out under the testing standards and conditions shown below.

### [1] Volume Resistivity

Measurement was carried out using 100 mm (L) × 100 mm (W) × 0.8 mm (T) test specimens and in accordance with JIS K 7194.

### [2] Glass Transition Point

Measurement was carried out with a dynamic mechanical analyzer (DMA, available from Hitachi High-Tech Science Corporation) and using 20 mm (L) × 10 mm (W) × 0.8 mm (T) test specimens.

### [3] Weight Change in Hot-Water Immersion

A 50 mm (L) × 50 mm (W) × 0.8 mm (T) test specimen was placed in a stainless steel pressure vessel containing 300 mL of deionized water, and the percent change in weight following a 75-hour test at 150°C was measured.

### [4] Gas Permeability Test

Using circular test specimens having a thickness of 800 µm and a diameter of 44 mm, the hydrogen permeability coefficient was measured at a gas pressure of 2 kgf/cm² (196 kPa) and 25°C in accordance with JIS K 7126-1 (Differential-pressure method).

### [5] Flexural Testing

Using 20 mm (L) × 25 mm (W) × 0.8 mm (T) test specimens, the flexural strain and flexural stress at 25°C were measured in accordance with JIS K 7171 at a test rate of 1 mm/min and a span between support points of 16 mm.

The materials used in the Examples and Comparative Examples are shown below.

### [Resin Binder: Thermoplastic Elastomer]

### Examples 1 to 3

A styrene-isobutylene-styrene block copolymer (SIBSTAR 103T, available from Kaneka Corporation)

### Comparative Example 2

A hydrogenated styrene-ethylene-butylene-styrene block copolymer (Tuftec H1041, available from Asahi Kasei Chemicals Corporation)

### [Resin Binder: Thermoset Resin]

### Examples 1 to 3

A hydrogenated bisphenol A-type epoxy resin (jERYX-8000, available from Mitsubishi Chemical Corporation) and a novolak-type phenolic resin (Shonol BRG-556, available from Showa Denko K.K.) combined in an equivalent ratio.

### Comparative Example 1

A cresol novolak-type epoxy resin (Epotohto YDCN-700-10, available from Nippon Steel & Sumikin Chemical Co., Ltd.) and a phenol novolak resin (Shonol BRG-556, available from Showa Denko K.K.) combined in an equivalent ratio.

### [Resin Binder: Compatibilizer]

A maleic anhydride-modified hydrogenated styrene-ethylene-butylene-styrene block copolymer (Tuftec M1913, available from Asahi Kasei Chemicals Corporation)

### [Carbonaceous Material]

A material obtained by mixing the natural graphite BF-30 (Shin-Etsu Chemical Co., Ltd.) and Mitsubishi Carbon Black #3050B (Mitsubishi Chemical Corporation) in a 90:10 weight ratio.

### [Curing Accelerator]

An imidazole-type curing accelerator (Curezol C11z, available from Shikoku Chemicals Corporation)

### [Examples 1 to 3]

The resin binder and the curing accelerator were mixed in the respective weight ratios shown in Table 1 and the mixture was charged into a planetary mixer containing a mixed solvent of toluene and methyl ethyl ketone (toluene : methyl ethyl ketone = 70:30 (weight ratio)), then stirred to effect dissolution, giving a resin solution having a solids content of 20 wt %. The carbonaceous material was charged into this resin solution in the weight ratio shown in Table 1, followed by additional stirring, thereby giving a slurry solution.

Next, this slurry solution was coated as a sheet onto a release film with a Comma Coater® R-FC (available from Hirano Tecseed Co., Ltd.) and dried at 65°C for one hour, following which the temperature was raised to 120°C over a period of one hour, removing the solvent within the sheet and thereby giving a sheet-like fuel cell separator precursor (thickness, 760 to 790 µm).

The resulting precursor was placed in a 400×160 mm mold, where it was compression-molded at a mold temperature of 100°C, a molding pressure of 285 kg/cm² (2.79 MPa) and a molding time of 30 minutes and thermally cured at 175°C for 1 hour, thereby giving a molded plate having gas flow channels.

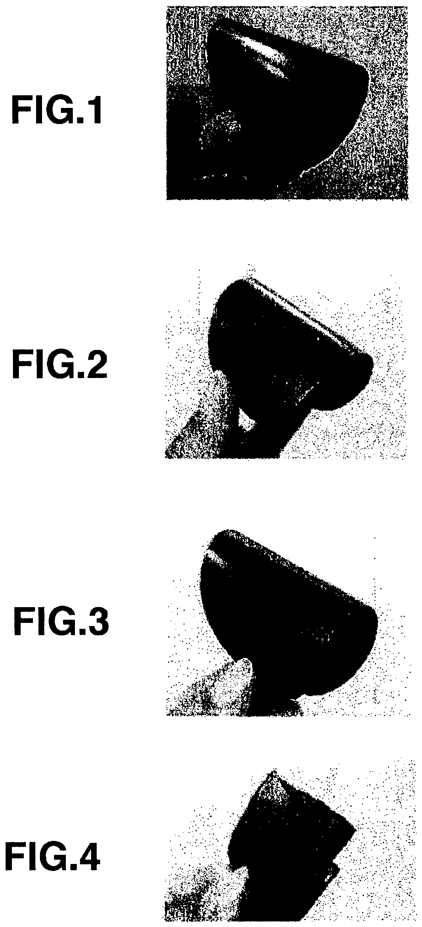

Next, the entire surface of the resulting molded plate was subjected to surface-roughening treatment by air blasting, at a pressure of 0.25 MPa, with alumina abrasive grit having a particle size of 20 µm, thereby giving a fuel cell separator. The resulting fuel cell separator had a flexibility such that it did not break even when folded as shown in FIGS. 1 to 3.

### [Comparative Example 1] Composition Lacking Thermoplastic Elastomer

Using a thermoset resin, carbonaceous material and curing accelerator in the weight ratio shown in Table 1, a fuel cell separator precursor and a fuel cell separator were obtained in the same way as in Example 1. The resulting fuel cell separator, as shown in FIG. 4, broke when folded and thus lacked flexibility.

### [Comparative Example 2]

Using a thermoplastic elastomer and carbonaceous material in the weight ratio shown in Table 1, a fuel cell separator precursor and a fuel cell separator were obtained in the same way as in Example 1.

Various properties of the separators obtained in each of the above Examples and Comparative Examples were measured and evaluated. The results are presented together in Table 1.

**[Table 1]**

| | | Example | | | Comparative Example | |
|---|---|---|---|---|---|---|
| | | 1 | 2 | 3 | 1 | 2 |
| Resin binder | Thermoplastic elastomer | 54 | 45 | 54 | | 200 |
| | Thermoset resin | 80 | 100 | 80 | 200 | |
| | Compatibilizer | 66 | 55 | 66 | | |
| Carbonaceous material | | 600 | 600 | 800 | 600 | 600 |
| Curing accelerator | | 2 | 2 | 2 | 2 | - |
| Moldability | | good | good | good | good | good |
| Volume resistivity (mΩ·cm) | | 19.0 | 23.7 | 15.4 | 13.5 | 82.5 |
| Glass transition point (°C) | | 146 | 146 | 148 | 212 | 109 |
| Weight change in hot water immersion test (wt %) | | 1.2 | 1.2 | 1.0 | 0.4 | 1.5 |
| Gas permeability coefficient (mol · m/m² · sec · MPa) | | 1.9×10⁻¹⁰ | 2.1×10⁻¹⁰ | 1.5×10⁻¹⁰ | 6.7×10⁻¹¹ | 3.1×10⁻⁹ |
| Three-point flexural tests | Flexural strain (%) | 0.94 | 1.03 | 0.82 | 0.61 | 1.98 |
| | Flexural stress (MPa) | 35.3 | 39.5 | 33.1 | 71.3 | 16.3 |

As is apparent from Table 1, each of the fuel cell separators obtained in Examples 1 to 3 had a good flexibility, good durability and good gas barrier properties, in addition to which the other separator characteristics were adequate for enabling the separator to endure practical use.

By contrast, the separator obtained in Comparative Example 1 possessed adequate characteristics, but had a high rigidity (poor flexibility) and was prone to cracking at a reduced thickness.

The separator in Comparative Example 2 had sufficient flexibility and was not prone to cracking even at a reduced thickness. However, not only were the separator characteristics far inferior, because the separator was too soft, there was a possibility of the channel geometry being crushed by the pressure applied to the separator during stacking.

## Claims

1. A fuel cell separator obtained by molding a composition comprising a carbonaceous material and a resin binder, the fuel cell separator being **characterized in that** the resin binder comprises a thermoset resin, a thermoplastic elastomer and a compatibilizer which renders the thermoset resin and thermoplastic elastomer compatible during mixing and molding,
wherein the thermoset resin includes at least one selected from the group consisting of phenolic resins, epoxy resins, furan resins, urea resins, melamine resins, polycarbodiimide resins, silicone resins and benzoxazine resins, wherein the binder contains thermoset resin in an amount from about 1 to about 100 parts by weight per 100 parts by weight of the combined amount of the thermoplastic elastomer and the compatibilizer,
and the weight ratio of thermoplastic elastomer to compatibilizer is from 4:6 to 9:1.

2. The fuel cell separator of claim 1, wherein the thermoplastic elastomer comprises a styrene thermoplastic elastomer.

3. The fuel cell separator of claim 2, wherein the styrene thermoplastic elastomer is a hydrogenated styrene thermoplastic elastomer.

4. The fuel cell separator of claim 3, wherein the hydrogenated styrene thermoplastic elastomer is a side chain-bearing hydrogenated styrene thermoplastic elastomer.

5. The fuel cell separator of claim 4, wherein the side chain-bearing hydrogenated styrene thermoplastic elastomer is a block copolymer comprising a side-chain-bearing polyolefin polymer block and a styrene polymer block.

6. The fuel cell separator of any one of claims 1 to 5, wherein the compatibilizer is a thermoplastic elastomer.

7. The fuel cell separator of any one of claims 1 to 6, wherein the compatibilizer is an acid-modified thermoplastic elastomer.

8. The fuel cell separator of claim 7, wherein the acid-modified thermoplastic elastomer is a maleic anhydride-modified hydrogenated styrene-ethylene-butylene-styrene block copolymer.

9. The fuel cell separator of any one of the preceding claims, wherein the thermoset resin comprises epoxy resins.

10. The fuel cell separator of claim 9, wherein the epoxy resins are at least one selected from the group consisting of o-cresol novolak-type epoxy resins, phenol novolak-type epoxy resins, bisphenol A-type epoxy resins, hydrogenated bisphenol A-type epoxy resins, bisphenol F-type epoxy resins, hydrogenated bisphenol F-type epoxy resins, biphenyl-type epoxy resins and brominated epoxy resins.

11. The fuel cell separator of claim 9 or 10, wherein the epoxy resins are hydrogenated bisphenol A-type epoxy resins.

## Patentansprüche

1. Brennstoffzellseparator, der durch das Formen einer Zusammensetzung erhalten wird, die ein kohlenstoffhältiges Material und ein Harzbindemittel umfasst, wobei der Brennstoffzellseparator **dadurch gekennzeichnet ist, dass** das Harzbindemittel ein duroplastisches Harz, ein thermoplastisches Elastomer und eine Mischhilfe umfasst, die das duroplastische Harz und das thermoplastische Elastomer während des Mischens und Formens kompatibel macht,
wobei das duroplastische Harz zumindest ein aus der aus Phenolharzen, Epoxyharzen, Furanharzen, Harnstoffharzen, Melaminharzen, Polycarbodiimidharzen, Silikonharzen und Benzoxazinharzen bestehenden Gruppe ausgewähltes umfasst, wobei das Bindemittel das duroplastische Harz in einer Menge von etwa 1 bis etwa 100 Gewichtsteile pro 100 Gewichtsteile der kombinierten Menge von thermoplastischem Elastomer und Mischhilfe enthält,
und das Gewichtsverhältnis von thermoplastischem Elastomer zu Mischhilfe 4:6 bis 9:1 beträgt.

2. Brennstoffzellseparator nach Anspruch 1, wobei das thermoplastische Elastomer ein thermoplastisches Styrolelastomer umfasst.

3. Brennstoffzellseparator nach Anspruch 2, wobei das thermoplastische Styrolelastomer ein hydriertes thermoplastisches Styrolelastomer ist.

4. Brennstoffzellseparator nach Anspruch 3, wobei das hydrierte thermoplastische Styrolelastomer ein hydriertes thermoplastisches Styrolelastomer mit Seitenkette ist.

5. Brennstoffzellseparator nach Anspruch 4, wobei das hydrierte thermoplastische Styrolelastomer mit Seitenkette ein Blockcopolymer ist, das einen Polyolefinpolymerblock mit Seitenkette und einen Styrolpolymerblock umfasst.

6. Brennstoffzellseparator nach einem der Ansprüche 1 bis 5, wobei die Mischhilfe ein thermoplastisches Elastomer ist.

7. Brennstoffzellseparator nach einem der Ansprüche 1 bis 6, wobei die Mischhilfe ein mit Säure modifiziertes thermoplastisches Elastomer ist.

8. Brennstoffzellseparator nach Anspruch 7, wobei das mit Säure modifizierte thermoplastische Elastomer ein mit Maleinsäureanhydrid modifiziertes hydriertes Styrol-Ethylen-Butylen-Styrol-Blockcopolymer ist.

9. Brennstoffzellseparator nach einem der vorangegangenen Ansprüche, wobei das duroplastische Harz Epoxyharze umfasst.

10. Brennstoffzellseparator nach Anspruch 9, wobei die Epoxyharze zumindest ein aus der aus Epoxyharzen vom o-Cresol-Novolak-Typ, Epoxyharzen vom Phenol-Novolak-Typ, Epoxyharzen vom Bisphenol-A-Typ, hydrierten Epoxyharzen vom Bisphenol-A-Typ, Epoxyharzen vom Bisphenol-F-Typ, hydrierten Epoxyharzen vom Bisphenol-F-Typ, Epoxyharzen vom Biphenyl-Typ und bromierten Epoxyharzen bestehenden Gruppe ausgewähltes Harz sind.

11. Brennstoffzellseparator nach Anspruch 9 oder 10, wobei die Epoxyharze hydrierte Epoxyharze vom Bisphenol-A-Typ sind.

## Revendications

1. Séparateur de pile à combustible obtenu par moulage d'une composition comprenant un matériau carboné et un liant de résine, le séparateur de pile à combustible étant **caractérisé en ce que** le liant de résine comprend une résine thermodurcissable, un élastomère thermoplastique et un agent de compatibilité qui rend la résine thermodurcissable et l'élastomère thermoplastique compatibles pendant un mélange et un moulage,
dans lequel la résine thermodurcissable comprend au moins une choisie dans le groupe comprenant des résines phénoliques, des résines époxy, des résines furaniques, des résines d'urée, des résines de mélamine, des résines de polycarbodiimide, des résines de silicone et des résines de benzoxazine, dans lequel le liant contient une résine thermodurcissable en une quantité d'environ 1 à environ 100 parties en poids pour 100 parties en poids de la quantité combinée de l'élastomère thermoplastique et de l'agent de compatibilité,
et le rapport pondéral élastomère thermoplastique sur l'agent de compatibilité est compris entre 4:6 et 9:1.

2. Séparateur de pile à combustible selon la revendication 1, dans lequel l'élastomère thermoplastique comprend un élastomère thermoplastique de styrène.

3. Séparateur de pile à combustible selon la revendication 2, dans lequel l'élastomère thermoplastique de styrène est un élastomère thermoplastique de styrène hydrogéné.

4. Séparateur de pile à combustible selon la revendication 3, dans lequel l'élastomère thermoplastique de styrène hydrogéné est un élastomère thermoplastique de styrène hydrogéné portant une chaîne latérale.

5. Séparateur de pile à combustible selon la revendication 4, dans lequel l'élastomère thermoplastique de styrène hydrogéné portant une chaîne latérale est un copolymère séquencé comprenant une séquence de polymère de polyoléfine portant une chaîne latérale et une séquence de polymère de styrène.

6. Séparateur de pile à combustible selon l'une quelconque des revendications 1 à 5, dans lequel l'agent de compatibilité est un élastomère thermoplastique.

7. Séparateur de pile à combustible selon l'une quelconque des revendications 1 à 6, dans lequel l'agent de compatibilité est un élastomère thermoplastique modifié par acide.

8. Séparateur de pile à combustible selon la revendication 7, dans lequel l'élastomère thermoplastique modifié par acide est un copolymère séquencé de styrène-éthylène-butylène-styrène hydrogéné modifié par anhydride maléique.

9. Séparateur de pile à combustible selon l'une quelconque des revendications précédentes, dans lequel la résine thermodurcissable comprend des résines époxy.

10. Séparateur de pile à combustible selon la revendication 9, dans lequel les résines époxy sont au moins une choisie dans le groupe comprenant des résines époxy de type novolaque d'o-crésol, des résines époxy de type novolaque de phénol, des résines époxy de type bisphénol A, des résines époxydes de type bisphénol A hydrogénées, des résines époxy de type bisphénol F, des résines époxy de type bisphénol F hydrogénées, des résines époxy de type biphényle et des résines époxy bromées.

11. Séparateur de pile à combustible selon la revendication 9 ou 10, dans lequel les résines époxy sont des résines époxy de type bisphénol A hydrogénées.
